# EUROPEAN PATENT APPLICATION

(11) **EP 3 251 822 A1**
(43) Date of publication of application: **06.12.2017**
(21) Application number: 17173176.3
(22) Date of filing: 29.05.2017
(51) Int. Cl.: B30B 9/06, B30B 9/26, B01D 25/21, C12G 1/02, C12G 1/00

(54) **DEVICE FOR THE AMPLIFICATION OF THE DRAINAGE OF THE LIQUID FROM THE PULP OF GRAPES IN A WINE PRESS**

(30) Priority: 30.05.2016 IT UA20163934; 23.05.2017 IT 201700055638
(71) Applicant: Mancuso, Leonardo, 95014 Giarre (CT) (IT)
(72) Inventor: Mancuso, Leonardo, 95014 Giarre (CT) (IT)
(74) Representative: Scorza, Federica

(57) **Abstract**

Device (105, 205, 305, 405, 505, 605, 705, 805) for the amplification of the drainage of the liquid from the grape pulp in a wine press, comprising a solid body having a first chiseled surface (105a; 205a; 315a, 325a; 405a; 505a; 605a; 605'a; 705a; 805a) and a second chiseled surface (105b; 205b; 315b, 325b; 405b; 505b; 605b) and a central trough hole (105c, 205c, 405c, 505c, 605c, 705c, 805c) between said chiseled surfaces, said first chiseled surface (105a; 205a; 315a, 325a; 405a; 505a; 605a; 605'a; 705a; 805a) comprising at least a first plurality of trough hollow regions and said second chiseled surface (105b; 205b; 315b, 325b; 405b; 505b; 605b) comprising at least a second plurality of trough hollow regions around the central hole.

Said chiseled surfaces (105a; 205a; 315a, 325a; 405a; 505a; 605a; 605'a; 705a; 805a; 105b; 205b; 315b, 325b; 405b; 505b; 605b) are convex and that the intersection regions between said trough hollow regions are configured for conveying the liquid obtained from the pressing of the grape pulp.

## Description

The present invention relates to a device for the drainage of the liquid from the pulp of grapes in a wine press.

Various types of wine press are known. The wine press is a machine widely used in oenology to exert pressure on the pulp of grapes. This type of press generally serves to squeeze the pomace after the alcoholic fermentation, i.e. at the time of racking in the vinification of grapes, red, or directly on the grapes, if it is white. As already stated, the first racking serves to separate the must from the pomace thanks to the press, which can be structured according to different mechanical procedures. A first differentiation can be made between discontinuous and continuous presses. Among the discontinuous presses there are the hydraulic presses, with screw or lever. The hydraulic presses exploit the Pascal principle to apply to the liquid a much larger force with a minimum of effort.

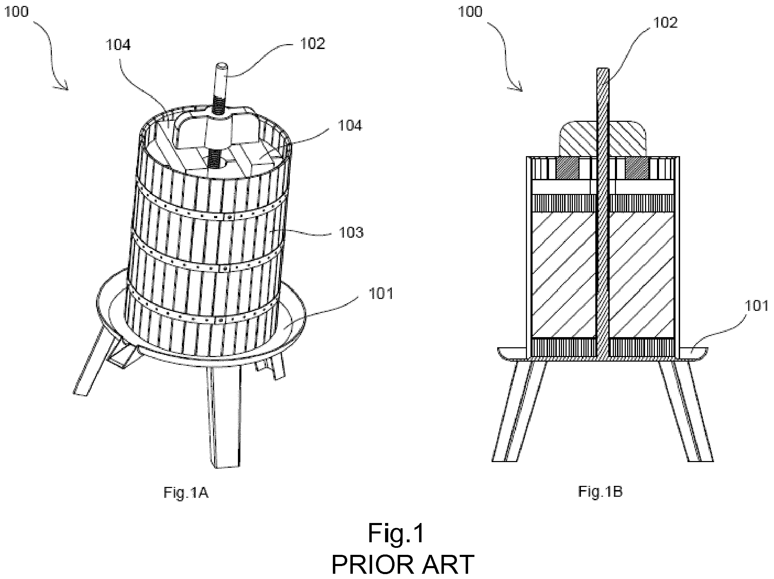

A wine lever or screw press 100, shown in Figure 1, is generally composed of a base 101, of an appropriate size, which can be in cast iron, wood or granite, and has a central hole and a flute, diameter and variable depth depending on the considered machine, with the function to channel the pressed product. At the center a screw 102 in iron is housed, perpendicular to the base, more or less long, firmly anchored below the base by means of a large nut. In the circular channeling of the base, concentric and external to the central hole, the cage 103 of the press 100 is located. It is a cylindrical structure formed by slats of oak wood, spaced from each other and fastened by means of bolts on robust iron semicircles. On top of the central screw a big nut called "spiral" is present. It consists essentially of a heavy iron disc on the circumference of which holes are drilled, in which are housed one or two pawls with a triangular base. These allow the nut to be screwed or unscrewed along the central screw, by means of a forward-backward movement imprinted by a hand-operated auction, which acts on it. Grapes or squeezed grapes are loaded into the press cage, leaving a certain margin of space left. When this is done, the material to be pressed is covered with two robust semicircles in oak wood that, once joined, coincide with the diameter of the cage itself, leaving a gap only to the center screw. Then a pair of wooden parallelepipeds with a square base 104 is put perpendicular to the direction in which care was taken to lay the two semicircles. Then successive pairs of parallelepipeds, said jacks, gradually shorter, are positioned to make sure that each pair is perpendicular to the other. At the end, the nut is manually adjusted so as to place it in contact with the last parallelepipeds positioned, and it has been secured that the pawls are inserted correctly, or faced in a sense for tightening the spiral and thus press, faced in another sense for unscrewing. At this point by actuating counterclockwise the rod connected to the nut, it is simply moved to the right without acting in any way on boards and making raise the pawls. Taking, however, strength and pushing the rod in a clockwise direction, the nut goes down along the central screw of the press and the boards are lowered by squeezing the marc present in the cage 103. In doing so the liquid runs down the staves of the cage 103 itself subsequently going to be channeled in the channeling of the base 101. From there it will then come out in a container near the press, by means of a lateral hole in the base. At the end of pressing the direction of the pawls is reversed, the nut is unscrewed and, finally, the cage of the press is disassembled, so as to be able to unscrew more easily the nut and take off all the boards used in the process, to allow the removal of the residual material present on the base and the cleaning of the press in all its parts.

The problem of the wine presses, both hydraulic or lever or screw, is that, since the press has the boards above and the base below, the liquid product does not find the way out and, with the advancement of machining, the capacity of drainage is reduced, due to the extrusion of the part devoted to drainage, creating an opposing strength to the output force. For this reason, it is necessary to employ a greater force for the pressing, thus causing a pressure exaggeration exerted on the paste by its less exploited core towards the outer perimeter of the excessively stressed cage. Moreover, this material, once pressed, undergoes unequal pressures from the center of the cage towards the staves. In particular, the pasta massed in contact with the staves of the cage is greatly abused, therefore the pressing does not appear uniform between the central inner region of the cage and the lateral region near the cage slats.

Purpose of the present invention is to provide a device for the amplification of the drainage of the liquid from the pulp of grapes in a wine press with drain channels to increase the draining of the liquid surface, and then be able to make uniform the pressing operation, improving the quality of the processed product, increasing the amount which can used and reducing processing times, having, therefore, the characteristics such as to overcome of the presses not the limits.

According to the present invention, a device for the amplification of drainage of the liquid from the pulp of grapes in a wine press is provided, as defined in claim 1.

For a better understanding of the present invention it is now described a preferred embodiment, purely by way of non-limiting example, with reference to the accompanying drawings, in which:
- figures 1A-1B show respectively three-dimensional schematic and sectional view of a wine screw press, according to the prior art;
- Figure 2 shows a two-dimensional schematic view of a first embodiment of a device for the amplification of drainage of the liquid from the pulp of grapes in a wine press, according to the invention;
- Figure 3 shows a two-dimensional schematic view of a second embodiment of the device for the amplification of drainage of the liquid from the pulp of grapes in a wine press, according to the invention;
- figures 4A-4B show respectively a schematic bi-dimensional view and a schematic top view of a first machined surface of the first embodiment of Figure 2, according to the invention;
- figures 5A-5B show respectively a bi-dimensional schematic view and a schematic top view of a second machined surface of the first embodiment of Figure 2, according to the invention;
- Figure 6 shows a three-dimensional schematic view of one of the circular sectors present in the first machined surface of Figure 4, according to the invention;
- Figure 7 shows a schematic view of one of the circular sectors present in the second machined surface of Figure 5, according to the invention;
- Figures 8A-8B show cross-sectional views along a radial groove of the second machined surface of the first embodiment, respectively, of Figure 2 and of the second embodiment of Figure 3, according to the invention;
- Figures 9A-9C show respectively a schematic three-dimensional perimeter view, a three-dimensional schematic view along the section A-A and a schematic sectional view along a radial groove of a circular sector of a pair of devices according to the second embodiment of Figure 3, according to the invention;
- Figure 10 shows a schematic top view of a third embodiment of the device for the amplification of drainage of the liquid from the pulp of grapes in a wine screw press, according to the invention;
- Figure 11 shows a schematic top view of a pair of devices of Figure 10 inserted in one of the possible intermediate vertical positions within a wine screw press, according to the invention;
- Figure 12 shows a schematic top view of a first chiseled surface of a fourth embodiment of a device for the amplification of drainage of the liquid from the pulp of grapes in a wine press, according to the invention;
- Figure 13 shows a schematic top view of a second chiseled surface of the fourth embodiment of the device for the amplification of drainage of the liquid from the pulp of grapes in a wine press, according to the invention;
- Figure 14 shows a schematic three-dimensional view of a first chiseled surface of a fifth embodiment of the device for the amplification of drainage of the liquid from the pulp of grapes in a wine press, according to the invention;
- Figure 15 shows a schematic three-dimensional view of a second chiseled surface of the fifth embodiment of the device for the amplification of drainage of the liquid from the pulp of grapes in a wine press, according to the invention;
- Figure 16 shows a schematic three-dimensional view of a first chiseled surface of a sixth embodiment of the device for the amplification of drainage of the liquid from the pulp of grapes in a wine press, according to the invention;
- Figure 17 shows a schematic top view of a second chiseled surface of the sixth embodiment of the device for the amplification of drainage of the liquid from the pulp of grapes in a wine press, according to the invention;
- Figure 18 shows a schematic three-dimensional view of a first chiseled surface of a seventh embodiment of the device for the amplification of drainage of the liquid from the pulp of grapes in a wine press, according to the invention;
- Figure 19 shows a schematic top view of a second chiseled surface of the seventh embodiment of the device for the amplification of drainage of the liquid from the pulp of grapes in a wine press, according to the invention;
- Figure 20 shows a schematic sectional view of two devices of figure 18 and 19 overlapping each other and separated by a separator element, according to the invention;
- Figures 21A-21B show respectively a schematic three-dimensional view of a first chiseled surface of an eighth embodiment of the device for the amplification of drainage of the liquid from the pulp of grapes in a wine press and an enlarged detail of such two overlapping devices, according to the invention;
- Figure 22 shows a schematic sectional view of a wine press in which devices for the amplification of drainage of the liquid from the pulp of grapes in a wine press are applied, according to the invention.

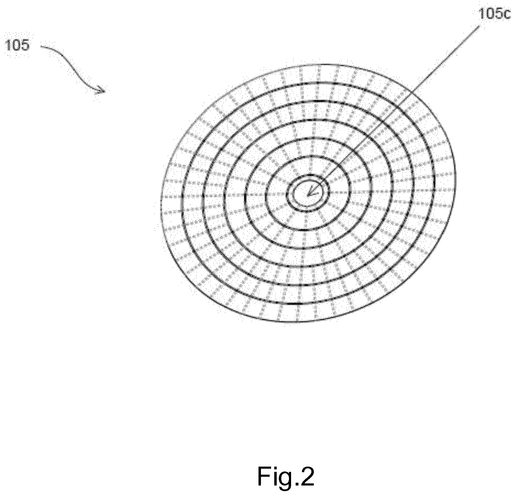

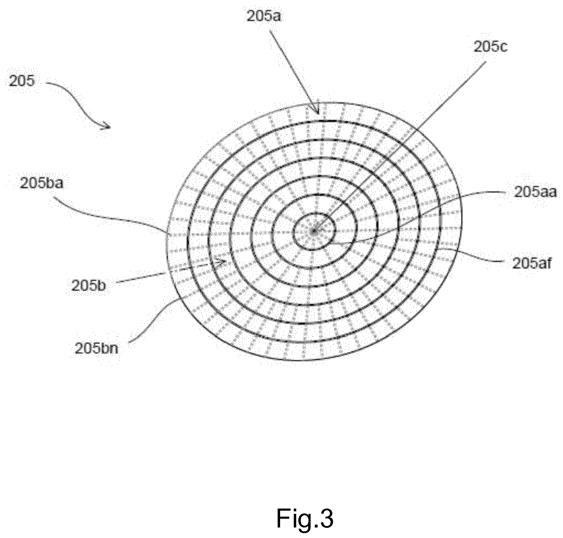

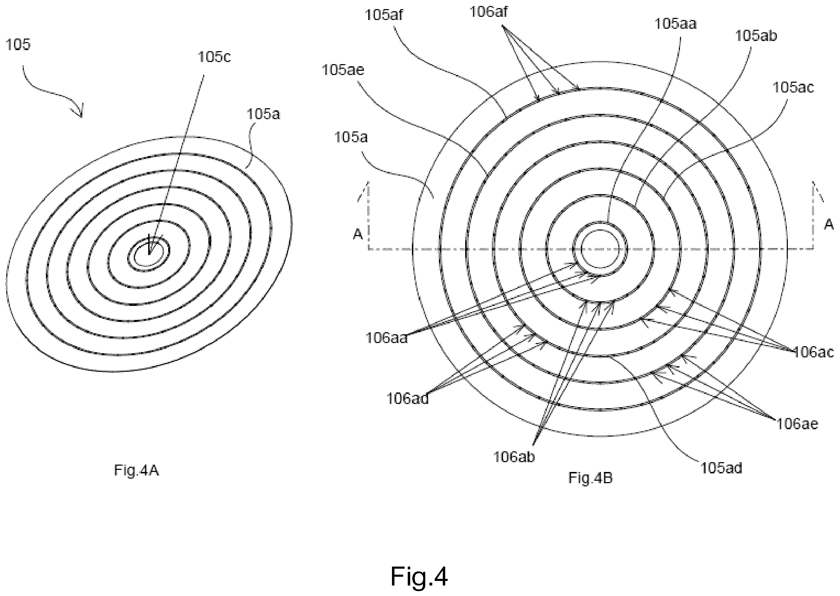

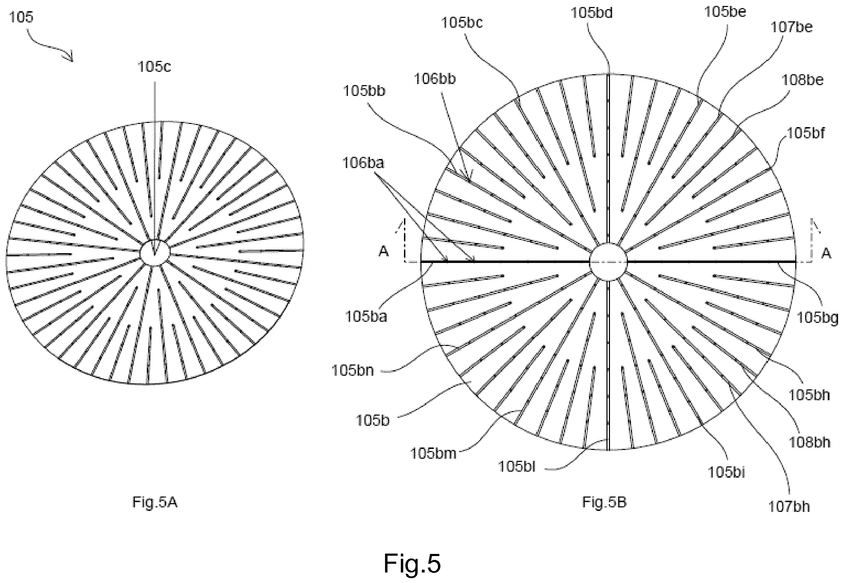

With reference to these figures and, in particular, to Figures 2 and 3, a device for the amplification of drainage of the liquid from the pulp of grapes in a wine press is shown, according to the invention. In particular, Figure 2 shows a first embodiment of the device 105 for the amplification of drainage of the liquid from the pulp of grapes in a wine press, comprising a solid body provided with a first machined surface 105, shown in Figure 4, and a second machined surface 105b, shown in Figure 5, and comprising a central hole 105c, of a size suitable to the passage of the screw of a wine press. Substantially the solid body, the first machined surface 105a and the second machined surface 105b constitute means for the amplification of the liquid drainage from the pulp of grapes when placed inside a wine press.

According to a second embodiment shown in Figure 3, the device 205 includes a central hole 205c created by the intersection of the first and second machined surfaces.

According to an aspect of the invention, the device 105 or 205 has a circular shape.

According to another aspect of the invention, the device 105 or 205 has a non-circular shape, for example rectangular, compatible with the shape of the wine press in which it is applied.

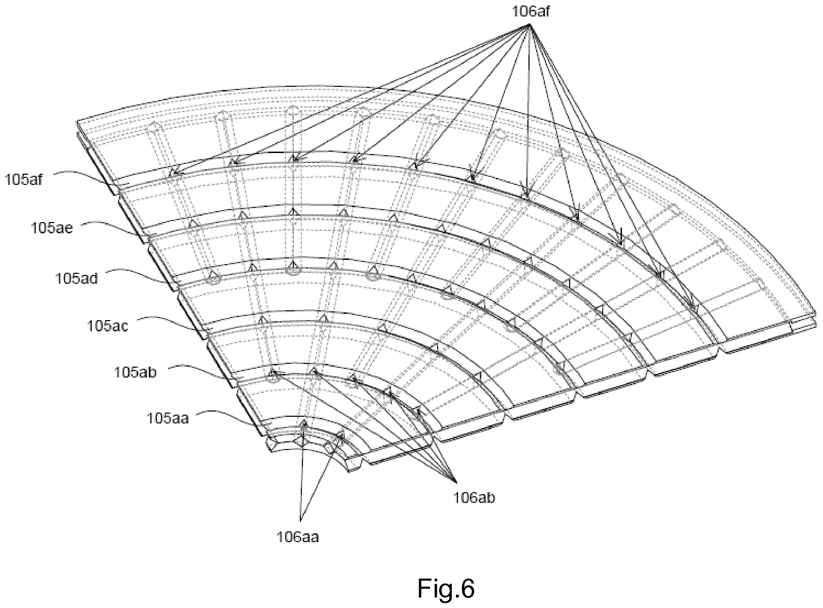

According to another aspect of the invention, with particular reference to the first embodiment, the device 105 for the amplification of drainage of fluid from the pulp of grapes in a wine press is a disc provided with a first machined surface 105, shown in Figure 4, and comprises a plurality of concentric circular grooves around the central hole 105c. For example, starting from the central hole 105c, the first machined surface 105a shows six concentric circular grooves 105aa, 105ab, 105ac, 105ad, 105ae, 105af, better shown in the circular sector of Figure 6. The second machined surface 105b of the device 105, shown in Figure 5, comprises, instead, a plurality of first radial grooves starting from the central hole 105c, for example, the first twelve 105ba radial grooves, 105bb, 105bc, 105bd, 105be, 105bf, 105bg, 105bh, 105b, 105bp, 105bm, 105bn.

The intersection between the grooves of the first and second machined surface forms a plurality of holes at the intersection of each radial groove 105ba, 105bb, 105bc, 105bd, 105be, 105bf, 105bg, 105bh, 105bi, 105bl, 105bm, 105bn of second machined surface 105b with each concentric circular groove 105aa-105af of the first machined surface 105a.

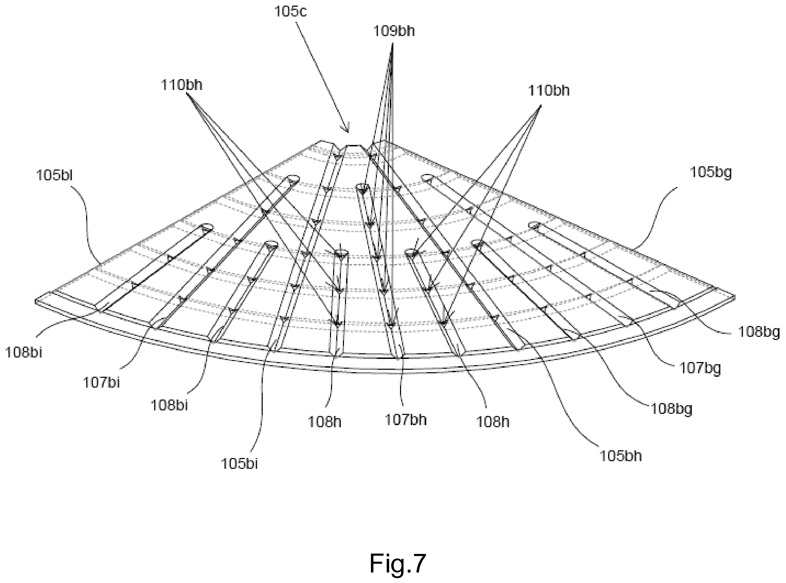

In particular, for clarity of detail, each concentric groove 105aa-105af, shown in figure 4B and even more in detail in Figure 7, has, as well, a plurality of through holes 106aa, 106ab, 106ac, 106ad, 106ae, 106af, in variable number, depending on the diameter of the groove itself, and spaced from each other by a circular arc of predetermined length depending on the diameter of the device 105. In addition, each of the first radial grooves 105ba-105bn, shown in figure 5B, presents a plurality of through holes, for example six through holes for each groove: six holes 106ba for the radial groove 105ba, six holes 106bb for the groove 105bb, and so on, six holes 106bn for the groove 105bn, in variable number depending on the radius of the device 105 and hence on the length of each of the first radial grooves 105ba-105bn. More particularly, with reference to the first radial groove 105ba, the first through hole 106ba, starting from the central hole 105c, coincides with one of the through holes 106aa of the first circular groove 105aa of the machined surface 105a; the second through hole 106ba, starting from the central hole 105c, coincides with one of the through holes of the second circular groove 106ab of the second machined surface; and, so on, the last through hole 106ba, the sixth in the example of figure 5B, starting from the central hole 105c, coincides with one of the through holes 106af of the sixth circular groove 105af of the machined surface 105a. Therefore, the number of through holes 106ba-106bn respectively present in each radial groove 105ba-105bn is equal to the number of concentric circular grooves 105aa-105af, and, consequently, variable depending on the diameter of the device 105.

Advantageously according to the invention, the number of concentric circular grooves 105aa-105af is variable as a function of the diameter of the device 105, the increase of which can increment the drainage obtained by the device 105.

Advantageously according to the invention, the number of the radial grooves 105ba-105bn is variable as a function of the diameter of the device 105, a greater number of first radial grooves 105ba-105bn causing a greater draining effect of the device 105.

Intersecting the grooves of the first and second machined surface, a plurality of holes are formed at the intersection of each radial groove 105ba, 105bb, 105bc, 105bd, 105be, 105bf, 105bg, 105bh, 105bi, 105bl, 105bm, 105bn of the second machined surface 105b with each concentric circular groove 105aa-105af of the first machined surface 105a.

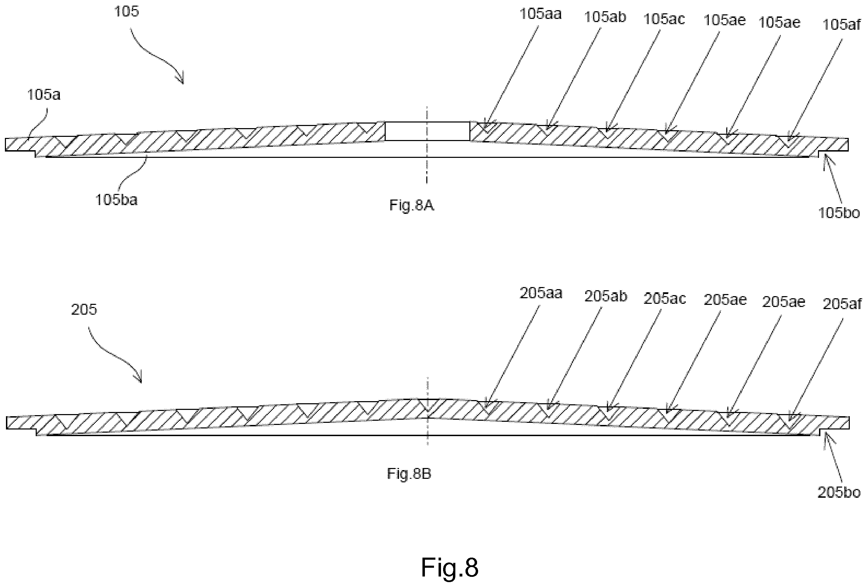

Similarly to the embodiment of the device 105, the device 205 of Figure 3 also comprises a disc having a first machined surface 205a comprising a plurality of concentric circular grooves about the central hole 205c. For example, starting from the central hole 205c, the first machined surface 105a shows six concentric circular grooves 205aa, 205ab, 205ac, 205ad, 205ae, 205af, better shown in the section of Figure 8B. The second machined surface 205b of the device 205, on the other hand, comprises a plurality of radial grooves starting from the central hole 205c, e.g. twelve first radial grooves 205ba, 205bb, 205bc, 205bd, 205be, 205bf, 205bg, 205bh, 205bi, 205bl, 205bm, 205bn.

Figure 8A shows the section of the device 105, for example, along the radial groove 105ba and Figure 8B shows a similar section of the device 205, for example, along its radial groove 205ba.

Advantageously according to the invention, the second machined surface 105b, 205b comprises a circular peripheral groove 105bo, 205bo configured to collect the liquid drainage passing through the radial grooves of the second machined surface 105b, 205b.

Advantageously according to the invention, the first machined surface 105a, 205a is configured to be always in contact with the grapes mass inside a wine press, while the second machined surface 105b, 205b is configured to drain the liquid resulting from the pressing of the grapes.

Advantageously according to the invention, the device 105 or 205 has a convex surface.

In addition, as best shown in Figure 5, with particular reference to the device 105, two first radial adjacent grooves, such as 105bh and 105bi, define a circular sector of the second machined surface 105b. Therefore, the device 105 comprises, in all, four of these circular sectors. Each circular sector comprises a second central radial groove, 107bh in the example in Figure 5, having a length less than that of the first radial grooves, for example of the grooves 105bh and 105bi, and third lateral radial grooves, 108bh in the example in figure 5, among which the second central radial groove 107bh is comprised, and having a lower length with respect to that of the second central radial groove. Each of the second radial grooves 107ba-107bn comprises a plurality of through holes, for example five through holes, 109ba-109bn, which are also formed by the intersection of the grooves of the two machined surfaces 105a and 105b, in a variable number according to the radius of the device 105 and, therefore, depending on the length of each of the second radial grooves 107ba-107bn. More in detail, with reference to the radial groove 107bh of Figure 5, the first through hole 109bh, starting from the central hole 105c, coincides with one of the through holes 106ab of the second circular groove 105ab of the machined surface 105a; and, so on, the last through hole 109bh, the fifth in the example of Figure 7, starting from the central hole 105c, coincides with one of the through holes 106af of the sixth circular groove 105af of the machined surface 105a. Therefore, the number of through holes 109ba-109bn respectively present in each radial groove 107ba-107bn is equal to the number of circular concentric grooves 105aa-105af decreased by one, and, consequently, variable as a function of the diameter of the device 105.

Each of the third lateral radial grooves 108ba-108bn comprises a plurality of through holes, for example three through holes, 110ba-110bn, in a variable number according to the device's radius 105 and, therefore, of the length of each of the third radial lateral grooves 108ba-108bn. More in detail, in reference to the radial lateral grooves 108bh of Figure 7, the first through hole 110bh, starting from the central hole 105c, coincides with one of the through holes 106ac of the third circular groove 105ac of the machined surface 105a; and, so on, the last through hole 110bh, the third in the example of Figure 7, starting from the central hole 105c, coincides with one of the through holes 106af of the sixth circular groove 105af of the machined surface 105a. Therefore, the number of through holes 110ba-110bn respectively present in each radial lateral groove 108ba-108bn is equal to the number of circular grooves concentric 105aa-105af decreased by three, and, consequently, variable as a function of the diameter of the device 105.

Advantageously according to the invention, the presence of the second central radial grooves and third lateral radial grooves, in addition to the first radial grooves increases the drainage power of the device 105.

Advantageously, according to the invention, a device 105 or 205 can be inserted on the basement of a generic wine press and another device 105 or 205 in the upper plate.

Advantageously according to the invention, pairs of devices 105 or 205 can be inserted into any intermediate position within the cage of a generic wine press.

Advantageously according to the invention, the device 205 is particularly suitable to be inserted inside a piston wine press with the first machined surface 205a, in any position inside the cage, in contact with the pulp of grapes to be pressed.

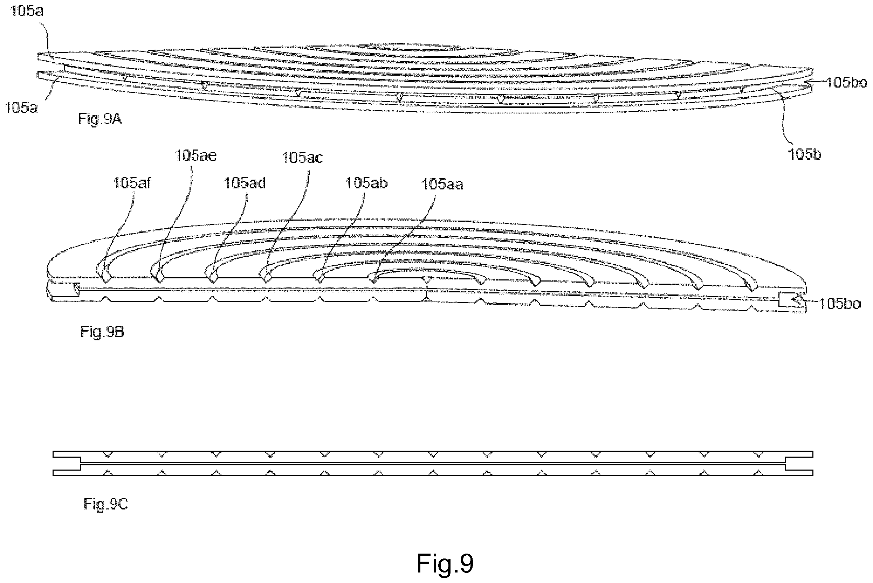

Figure 9 shows two devices 105 coupled to each other facing each other with the second machined surface 105b.

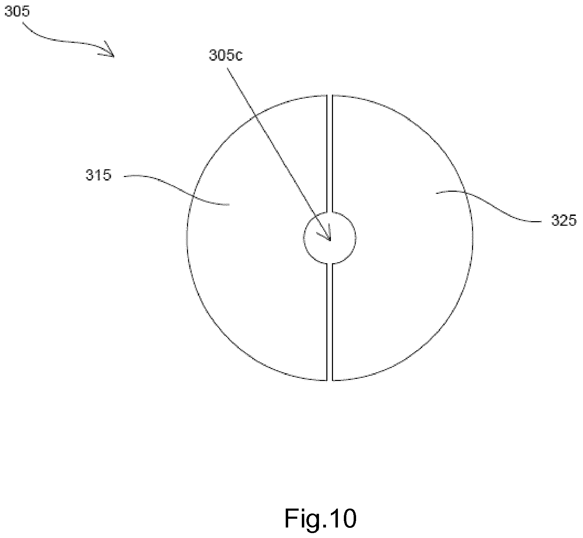

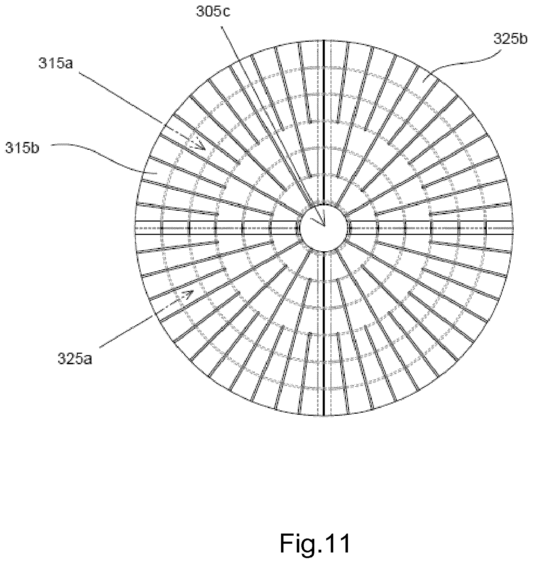

According to a third embodiment, as shown in figure 10 and 11, the device 305 comprises a first semicircular part 315 and a second semicircular part 325, each having a first machined surface 315a and a second machined surface 325b. These machined surfaces are of the same type already described for the first embodiment. This embodiment is particularly suitable for a screw wine press, like that of Figure 1. In this case, inside the press 100 of Figure 1, a device 305 may be coupled to another device with the parts 315 and 325 rotated by 90° with respect to corresponding parts 315 and 325 of the other device 305. This embodiment is particularly suitable for the screw wine presses, the screw being able to pass through a central hole 305c formed by coupling the first semicircular part 315 and the second semicircular part 325. A pair of such devices 305 overlapped at 90° is shown in figure 11. In particular, the radial grooves of the second machined surfaces of the devices 305 are perfectly aligned.

In particular, by inserting the pair of devices 305 inside a screw wine press 100 with the first machined surface 305a, in any position inside the cage, in contact with the pulp of grapes to be press, it is possible to obtain an amplified drainage, i.e. to optimize the pressing of the grape pulp and collect, through the grooves of the first surface 305a communicating, through the holes 306aa-306af, with the second machined surface 305b from which the liquid obtained can be collected.

Advantageously according to the invention, the screw wine press, for example of the type of Figure 1, may comprise a single device 105 or 205 or 305, for example disposed on the bottom collection plate 101 and / or another device 105 or 205 or 305 adjacent to the pawls of the press (wooden planks) centrally coupled to the upper collection plate, not shown in the figure; or alternatively a pair of devices 305 in the middle positions in the press cage, in addition to other two devices 3 05, for example arranged one inside the bottom collection plate 101 and the other inside the top collection plate.

According to an aspect of the invention, for both embodiments, the two machined surfaces 105a and 105b, or 205a and 205b, or 315a, 325a, 315b, 325b have complementary vertical protrusions between them, for example, a male and a female, not shown in the figure.

Advantageously according to the invention, both the first machined surface 105a, 205aa, 315a, 325a and the second machined surface 105b, 205b, 315b, 325b are concave towards the outside in correspondence with the central hole 105c, 205c, 305c. Thanks to this concavity and to the force of gravity, the exit of the liquid is favored, creating the right slope for that output, by the lateral grooves of the press cage.

Advantageously according to the invention, the device for the amplification of drainage of fluid from the pulp of grapes in a wine press can also be inserted inside each type of press.

In particular, to allow the adaptation of the device to more than one type of wine press it is possible to use an adapter device between the device for amplifying the liquid drainage from the pulp of grapes in a wine press and the press itself.

According to an aspect of the invention, the device 105 or 205 or 305 is made of plastic material, e.g. polyethylene.

According to another aspect of the invention, the device 105 or 205 or 305 is made of steel.

According to another aspect of the invention, the device 105 or 205 or 305 is made of wood.

According to another aspect of the invention, the device 105 or 205 or 305 is made of wood and steel.

According to another aspect of the invention, the device 105 or 205 or 305 is made of biocompatible material.

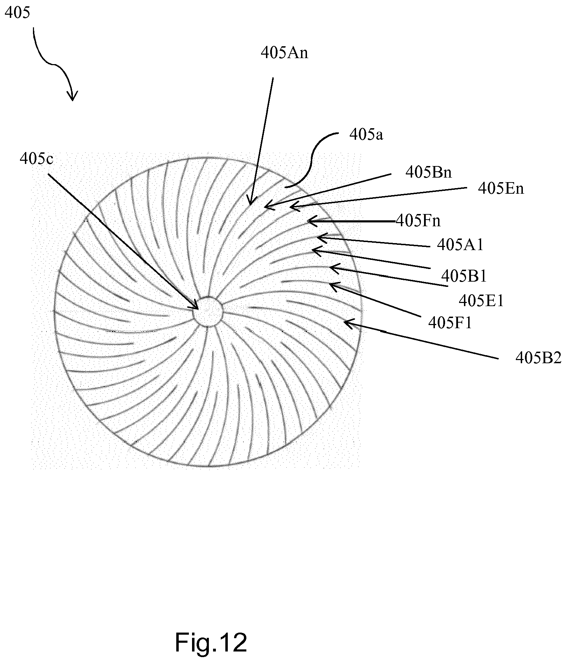

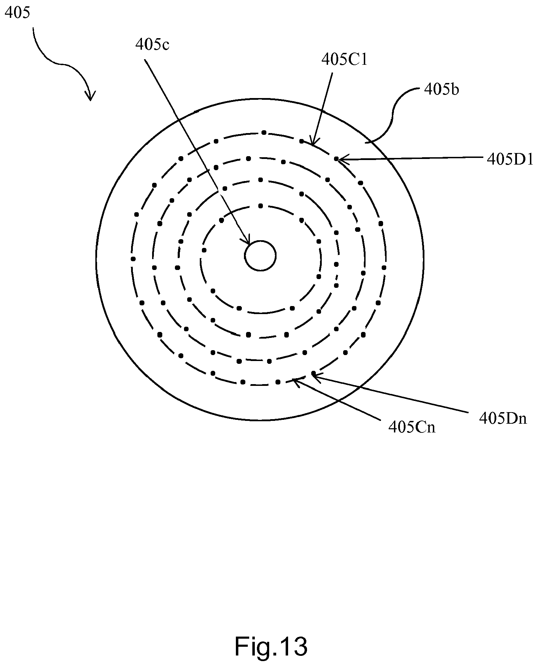

Figure 12 shows a fourth embodiment of the device 405 for the amplification of drainage of the liquid from the pulp of grapes in a wine press, comprising a solid disc-shaped body having a first chiseled surface 405a, shown in Figure 12, and a second chiseled surface 405b, shown in Figure 13, being both convex and comprising a central hole 405c. The device 405 is configured to be insertable within any wine press.

According to an aspect of the invention, the device 405 is a discoid. In other embodiments, it can be any other form, for example square or rectangular, and therefore adaptable to any wine press.

The first chiseled surface 405a comprises a plurality of first through grooved regions, or grooves, having helical shape 405A1 ....405An, which branch off from the central hole 405c, and a plurality of second through grooved regions, or grooves, of helical shape 405B1 ... .405Bn, third through grooved regions 405E1 ....405En, and fourth through grooved regions 405F1 ... 405Fn, comprised between two first grooves 405A1 ... .405An and having a lower length than these.

Advantageously according to the invention, the number of first, second, third and fourth though helical grooves 405A1... .405An, 405B1 ... .405Bn, 405E1- ... 405En, 405F1 ... 405Fn, increases proportionally to the size of the entire device 405.

According to an aspect of the invention, the second chiseled surface 405b comprises a plurality of first though grooved regions arranged on concentric circumferences around the hole 405c. In particular, each circumference includes linear though grooved regions 405C1 ... 405Cn, for example linear hole segments, alternating with circular though grooved regions 405D1 ... 405Dn, e.g. holes, and separated from these by solid regions of the chiseled surface 405b.

At the intersection of the first helical though grooved regions 405A1 ... .405An and second helical though grooved regions 405B1 ... .405Bn of the first chiseled surface 405a with the linear grooved regions 405C1 ... 405Cn and with the circular grooved regions 405D1 ... 405Dn are formed hollow regions configured to drain the liquid obtained from the grape paste when pressed on the device 405 and convey it through the convexity of the chiselled surfaces 405a and 405b outward so that it can be easily released from the holes present on the walls of any wine press.

Advantageously according to the invention, the larger the surface of the device 405, i.e. the chiseled surfaces 405a and 405b, the greater the number of grooved regions on the chiseled surfaces and the greater the number of hollow regions at the intersection, resulting in an increase of liquid uniformly drained.

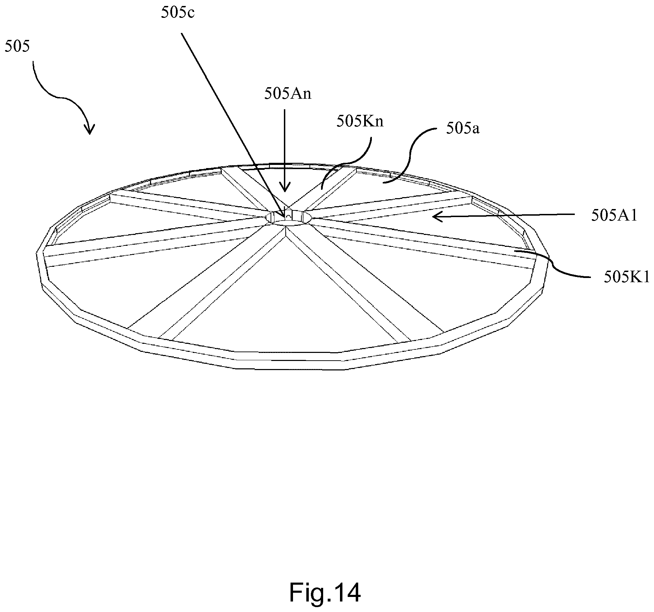

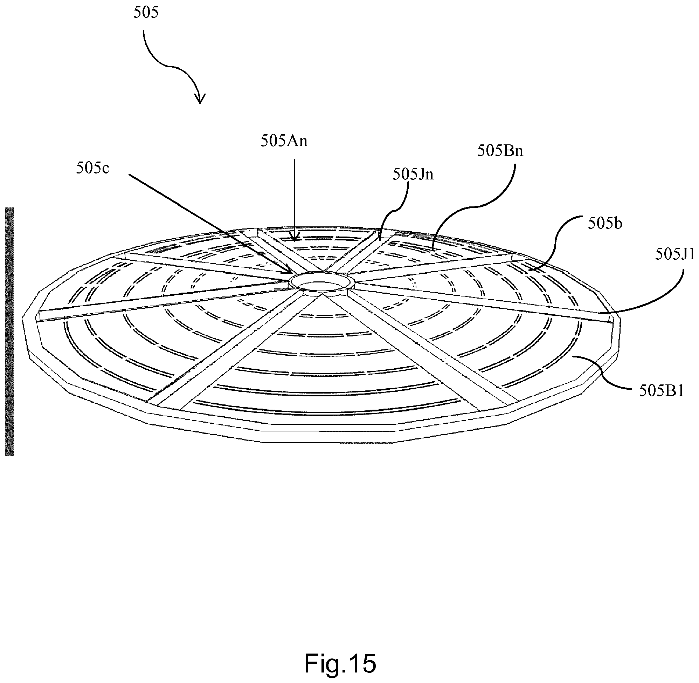

According to a fifth embodiment, the device 505, as shown in Figure 14, comprises a first chiseled surface 505a comprising trough circular sector regions, 505A ... 505An, circularly arranged along the peripheral circumference of the device 505, alternating with linear regions radial full 505K1 ... 505Kn. The second chiseled surface 505b, shown in Figure 15, comprises solid radial regions 505J1 ... .505Jn, positionable in correspondence with the solid radial regions 505K1 ... 505Kn, alternating with circular sector regions 505B1 ... 505Bn and comprising a plurality of trough grooved, linear or circular, regions.

According to another aspect of the invention, the second chiseled surface 505b comprises solid circular sectors alternating with circular sectors comprising a plurality of trough grooved portions, linear or circular, extending circularly along the direction of the circumference or radially.

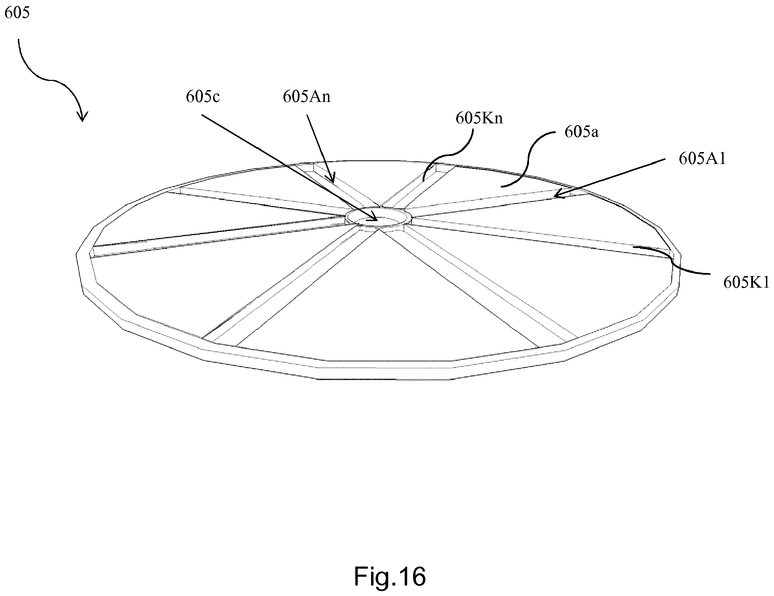

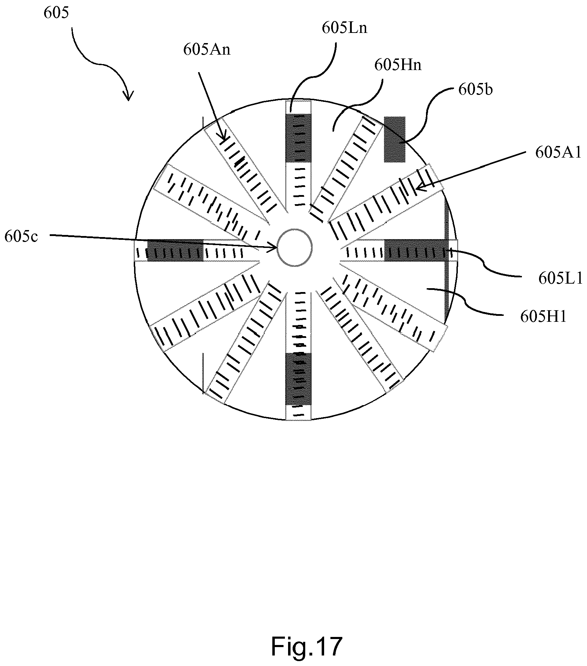

According to a sixth embodiment, the device 605, as shown in Figure 16, comprise a first chiseled surface 605a comprising trough grooved regions 605A1...605An alternated to solid circular sector regions 605K1 ... 605Kn. The second chiseled surface 605b, shown in Figure 17, comprises solid radial regions 605L1 ....605Ln comprising trough grooved portions, linear or circular, and solid circular sector regions 605H1 ... 605Hn.

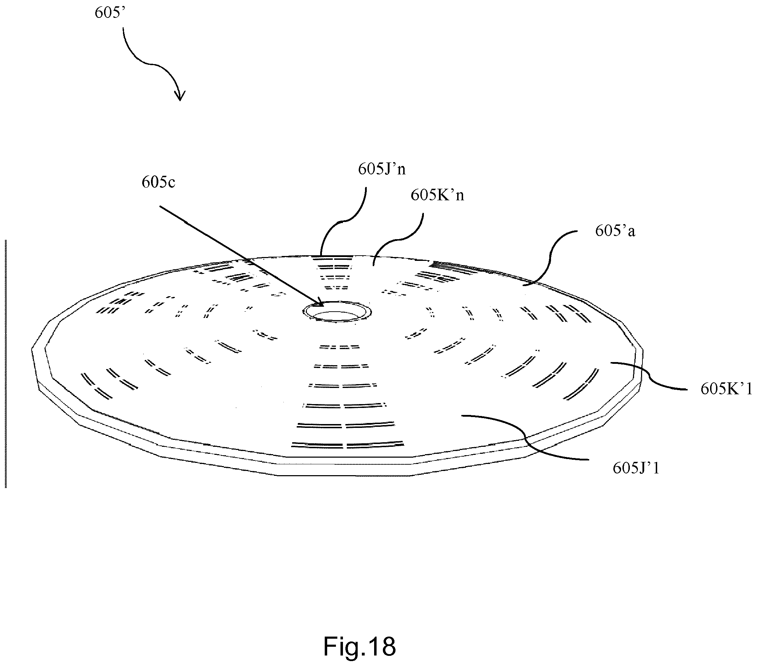

Alternatively, as shown in Figure 18, the first chiseled surface 605a' comprises solid circular sectors regions 605K'1 ... .605K'n alternated to solid radial regions 605J'1 ... .605J'n comprising trough grooved portions, linear or circular.

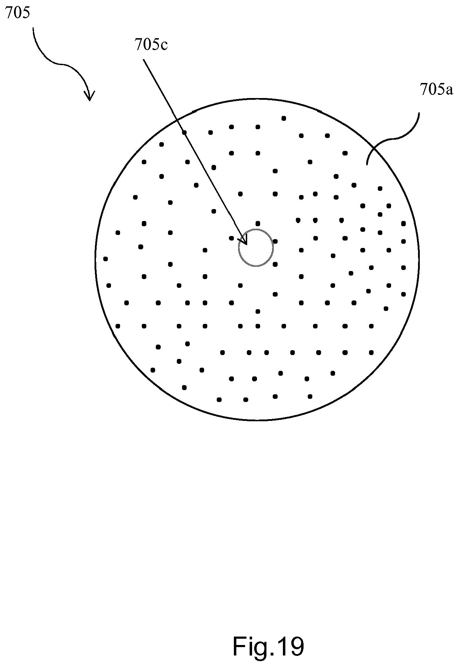

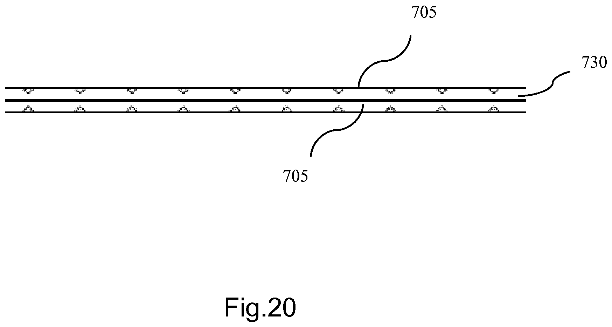

According to a seventh embodiment, the device 705, as shown in Figure 19, comprises a first chiseled surface 705th region, which is a solid region comprising multiple hollowed portions, for example holes or linear stretches. In this case, when two devices 705 are coupled to each other they are separated by a separator element 730, as shown in Figure 20.

Advantageously according to the invention, in the case where the hollowed portions are holes, these holes are advantageously tapered in order to easily evacuate the waste of the pressing.

Advantageously according to the invention, the devices 405-705 may be made of wood or plastic or a combination of wood and plastic, with first and second surfaces chiseled made by mold or fit together.

According to an eighth embodiment, the device comprises two identical devices made of foil or steel and able to be coupled.

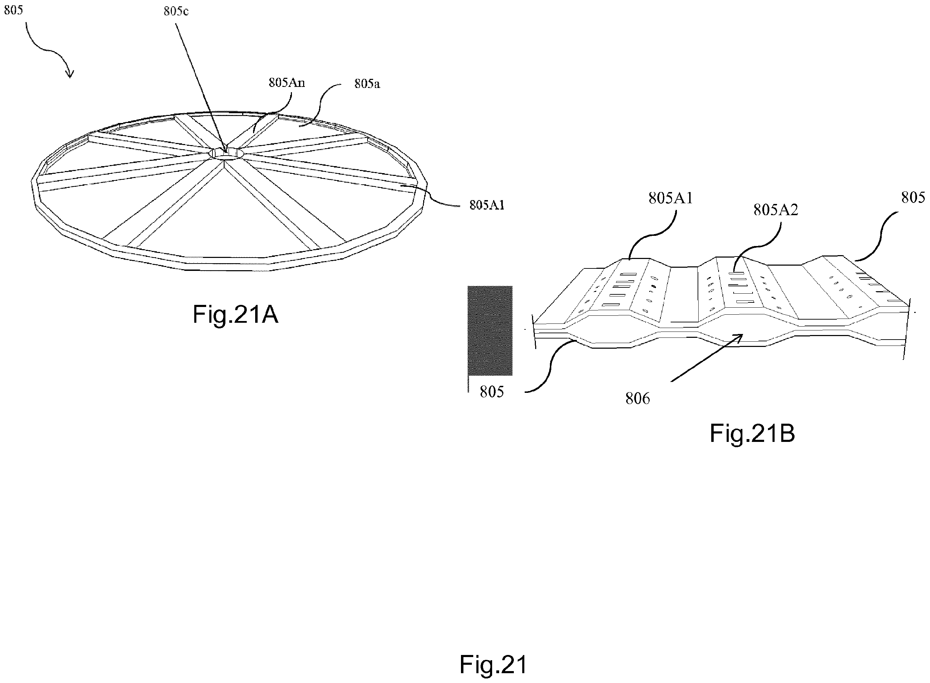

For example, as shown in Figure 21, the device 805 has a chiseled surface 805a comprising radial protuberances 805A interspersed with flat regions 805B. Therefore, by superimposing two devices 805 so that the protuberances 805A1 ... 805An are made to correspond facing outwards, tunnels, or hollow regions, 806 are formed. In addition, according to an aspect of the invention, the protuberances comprise trough grooved regions, circular or linear, to eject the liquid from above into the tunnel from which it can be collected.

Alternatively, the protuberances are helical radial, conical or triangular, linear or radial bars.

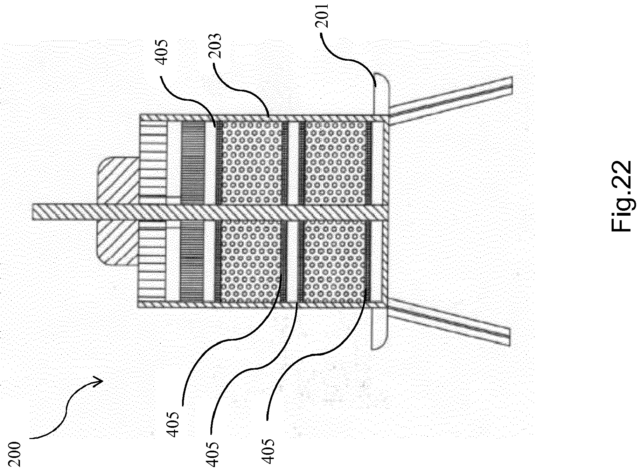

Advantageously according to the invention, different devices 405-805 can be placed in any intermediate position inside the cage of a generic wine press. In particular, an example of application is shown in Figure 22, in which a first empty region is located in the bottom of the press 200, in contact with the base 201; a first device of the type 405-805, for example 405, is located on this empty region; the grape is located on the first device 405; a second device of the type 405-805, for example 405, is located on the grape; a second empty region is located on the second device 405; a third device of the type 405-805, for example 405, is located on the second empty region; then again the pulp of grapes is located on the third device 405; then a fourth device of the type 405-805, for example 405, is located on the grapes; and finally a second empty region is formed on the fourth device 405.

Therefore, the device for the amplification of drainage of the liquid from the pulp of grapes in a wine press according to the invention allows to increase the uniformity of the crushing grapes inside the cage of a press in which it is applied.

Another advantage of the device for the amplification of drainage of the liquid from the pulp of grapes in a wine press according to the invention consists in the fact that collects better the liquid coming from the crushing of the grape pulp, amplifying the draining surface of the press.

A further advantage of the device for the amplification of drainage of the liquid from the pulp of grapes in a wine press according to the invention is to be economical.

Another advantage of the device for the amplification of drainage of the liquid from the pulp of grapes in a wine press according to the invention is to reduce the processing time and consumption of water and energy.

Finally, the device for the amplification of drainage of the liquid from the pulp of grapes in a wine press according to the invention is easy to install.

Finally, it is clear that the device for the amplification of drainage of the liquid from the pulp of grapes in a wine press here described and illustrated may be subject to modifications and variations without thereby departing from the scope of the present invention, as defined in appended claims.

## Claims

1. Device (105, 205, 305, 405, 505, 605, 705, 805) for the amplification of the drainage of the liquid from the grape pulp in a wine press, comprising a solid body having a first chiseled surface (105a; 205a; 315a, 325a; 405a; 505a; 605a; 605'a; 705a; 805a) and a second chiseled surface (105b; 205b; 315b, 325b; 405b; 505b; 605b) and a central trough hole (105c, 205c, 405c, 505c, 605c, 705c, 805c) between said chiseled surfaces, said first chiseled surface (105a; 205a; 315a, 325a; 405a; 505a; 605a; 605'a; 705a; 805a) comprising at least a first plurality of trough hollow regions and said second chiseled surface (105b; 205b; 315b, 325b; 405b; 505b; 605b) comprising at least a second plurality of trough hollow regions around the central hole, **characterized in that** said chiseled surfaces (105a; 205a; 315a, 325a; 405a; 505a; 605a; 605'a; 705a; 805a; 105b; 205b; 315b, 325b; 405b; 505b; 605b) are convex and that the intersection regions between said trough hollow regions are configured for conveying the liquid obtained from the pressing of the grape pulp.

2. Device (105, 205, 305, 405, 505, 605, 705, 805) for the amplification of the drainage of the liquid from the grape pulp in a wine press according to claim 1, **characterized in that** said first chiseled surface (105a, 205a) comprises a plurality of circular grooves (105aa, 105ab, 105ac, 105ad, 105ae, 105af; 205aa, 205ab, 205ac, 205ad, 205ae, 205af) concentric around said central hole (105c, 205c) and said second surface chiseled (105b, 205b) comprises a plurality of first radial grooves (105ba, 105bb, 105bc, 105bd, 105be, 105bf, 105bg, 105bh, 105bi, 105bl, 105bm, 105bn; 205ba, 205bb, 205bc, 205bd, 205be, 205bf, 205bg, 205bh, 205bi, 205bl, 205bm, 205bn) positioned radially from the central hole (105c, 205c), forming a plurality of through holes (106aa, 106ab, 106ac, 106ad, 106ae, 106af; 106ba, 106bb, 106bc, 106bd, 106be, 106bf, 106bh, 106bi, 106bl, 106bm, 106bn).

3. Device (105, 205, 305, 405, 505, 605, 705, 805) for the amplification of the drainage of the liquid from the grape pulp in a wine press according to claim 2, **characterized in that** each circular sector of the device (105) comprises a second central radial groove (107ba, 107bb, 107bc, 107bd, 107be, 107bf, 107bg, 107bh, 107bi, 107bl, 107bm, 107bn) shorter than the first radial grooves (105ba, 105bb, 105bc, 105bd, 105be, 105bf, 105bg, 105bh, 105bi, 105bl, 105bm, 105bn) and third lateral radial grooves (108ba, 108bb, 108bc, 108bd, 108be, 108bf, 108bg, 108bh, 108bi, 108bl, 108bm, 108bn) between which the second central radial groove (107ba, 107bb, 107bc, 107bd, 107be, 107bf, 107bg, 107bh, 107bi, 107bl, 107bm, 107bn), the third lateral radial grooves (108ba, 108bb, 108bc, 108bd, 108be, 108bf, 108bg, 108bh, 108bi, 108bl, 108bm, 108bn) being shorter than the second central radial groove (107ba, 107bb, 107bc, 107bd, 107be, 107bf, 107bg, 107bh, 107bi, 107bl, 107bm, 107bn) comprising a plurality of through holes (109ba, 109bb, 109bc, 109bd, 109be, 109bf, 109bg, 109bh, 109bi, 109bl, 109bm, 109bn) formed by the intersection of chasings of the two machined surfaces (105a, 105b) and the third lateral radial grooves (108ba, 108bb, 108bc, 108bd, 108be, 108bf, 108bg, 108bh, 108bi, 108bl, 108bm, 108bn) comprise through holes (110ba, 110bb, 110bc, 110bd, 110be, 110bf, 110bg, 110bh, 110bi, 110bl, 110bm, 110bn) coincident with one of the through holes (106aa, 106ab, 106ac, 106ad, 106ae, 106af).

4. Device (105, 205, 305, 405, 505, 605, 705, 805) for the amplification of the drainage of the liquid from the grape pulp in a wine press according to claim 2, **characterized in that** the second chiseled surface (105b, 205b) comprises a circular peripheral groove (105bo, 205bo).

5. Device (105, 205, 305, 405, 505, 605, 705, 805) for the amplification of the drainage of the liquid from the grape pulp in a wine press according to claim 1, **characterized in** comprising a first semicircular part (315) and a second semicircular part (325) able to be coupled together, each having a first machined surface (315a, 325a) and a second machined surface (315b, 325b), the first semicircular part (315) and the second semicircular part (325) of a first device (305) being configured to be coupled to correspondent first semicircular part (315) and second semicircular part (325) of a second device (305), rotated at 90° with respect to corresponding parts (315, 325) of the first device (305), thus forming a central hole (305c).

6. Device (105, 205, 305, 405, 505, 605, 705, 805) for the amplification of the drainage of the liquid from the grape pulp in a wine press according to claim 1, **characterized in that** the two chiseled surfaces (105a, 105b; 205a, 205b; 315a, 325a, 315b, 325b) have vertical protrusions complementary with each other by means of a male / female coupling.

7. Device (105, 205, 305, 405, 505, 605, 705, 805) for the amplification of the drainage of the liquid from the grape pulp in a wine press according to claim 1, **characterized in that** the first chiseled surface (405a) comprises a plurality of first trough hollow regions of helical shape (405A1 ....405An) and a plurality of second, third and fourth trough hollow regions of helical shape (405B1 ....405Bn; 405E1 ... .405En; 405F1 ... 405Fn) comprised between two first trough hollow regions (405A1... .405An) and having a length less than these; and said second chiseled surface (405b) comprises a plurality of first trough hollow regions arranged on concentric circumferences around the hole (405c), each comprising trough hollow linear regions (405C1...405Cn) alternated to circular through hollow regions (405D1 ... 405Dn) and separated from solid regions of the chiseled surface (405b).

8. Device (405, 505, 605, 705, 805) for the amplification of the drainage of the liquid from the grape pulp in a wine press according to claim 1, **characterized in that** said first chiseled surface (505a) comprises trough hollow circular sector regions (505A1...505An) arranged circularly along the circumference of the device (505), alternating with solid radial linear regions (505K1 ... 505Kn); and said second chiseled surface (505b) comprises - solid radial regions (505J1 ....505Jn), positionable in correspondence with the solid radial regions (505K1 ... 505Kn), alternating with circular sector regions (505B1 ... 505Bn) and comprising a plurality of trough hollow regions, and - first solid circular sectors alternating with second circular sectors comprising a plurality of through hollow portions extending circularly or radially.

9. Device (405, 505, 605, 705, 805) for the amplification of the drainage of the liquid from the grape pulp in a wine press according to claim 1, **characterized in that** said first chiseled surface (605) comprises trough hollow radial linear regions (605A1 ... 605An) alternating with solid circular sector regions (605K1 ....605Kn) and said second chiseled surface (605b) comprises solid radial regions (605L1 ....605Ln) comprising trough hollow portions and solid circular sector regions (605H1 ... 605Hn).

10. Device (405, 505, 605, 705, 805) for the amplification of the drainage of the liquid from the grape pulp in a wine press according to claims 1 and 9, **characterized in that** said first chiseled surface (605a') comprises solid circular sector regions (605K'1 ... .605K'n) alternating with solid radial regions (605J'1 ... .605J'n) comprising trough hollow portions.

11. Device (405, 505, 605, 705, 805) for the amplification of the drainage of the liquid from the grape pulp in a wine press according to claim 1, **characterized in that** said first chiseled surface (705a) is a solid region comprising multiple trough hollow portions.

12. Device (405, 505, 605, 705, 805) for the amplification of the drainage of the liquid from the grape pulp in a wine press according to claim 1, **characterized in that** said multiple trough hollow portions are tapered holes.

13. Device (405, 505, 605, 705, 805) for the amplification of the drainage of the liquid from the grape pulp in a wine press according to claim 1, **characterized in** being made of wood or plastic or a combination of wood and plastic, the first and the second chiseled surfaces being molded manufactured or glued together.

14. Device (405, 505, 605, 705, 805) for the amplification of the drainage of the liquid from the grape pulp in a wine press according to claim 1, **characterized in** comprising two identical devices (805) able to coupled and made of foil.

15. Device (405, 505, 605, 705, 805) for the amplification of the drainage of the liquid from the grape pulp in a wine press according to claim 14, **characterized in that** the device (805) has a chiseled surface (805a) comprising protuberances (805A) interspersed with flat regions (805B) and comprising trough hollow regions.

16. Device (405, 505, 605, 705, 805) for the amplification of the drainage of the liquid from the grape pulp in a wine press according to claim 15, **characterized in that** the protuberances (805A) are radial, or helical, or triangular, or linear.
